# EUROPEAN PATENT SPECIFICATION

(11) **EP 2 096 231 B1**
(45) Date of publication and mention of the grant of the patent: **07.07.2010**
(21) Application number: 08151927.4
(22) Date of filing: 26.02.2008
(51) Int. Cl.: E04F 13/08, E04D 3/36, F16B 43/00

(54) **Fixation device for panels**
Fixierungsvorrichtung für Paneele
Dispositif de fixation pour panneaux

(43) Date of publication of application: 02.09.2009
(73) Proprietor: REDCO S.A., 1880 Kapelle-op-den-Bos. (BE); Eternit AG, 10719 Berlin (DE)
(72) Inventor: Lammert, Michael, 10777 Berlin (DE)
(74) Representative: Vandeberg, Marie-Paule L.G.

(56) References cited:
- AT-U1- 9 234
- DE-A1- 4 239 333
- FR-A- 1 592 806
- GB-A- 2 202 024
- NL-C1- 1 001 623
- US-A- 4 985 979

## Description

### Field of the invention

The invention relates to a device for the fixation of panels on a support. The invention concerns more particularly a device suitable for the fixation of coated panels subject to dimensional changes on wooden or metal supports or frames.

### Background of the invention

Decorative panels are used in ventilated façade systems on buildings. They consist of aluminium, galvanised steel, HPL, fibre cement, or other materials available in sheet form. The panels are usually fixed to a profiled metal or wood support, which is fastened to the building wall. The panels need to be tightly fixed to the support structure in order to avoid vibration of the panels and noise created by loose parts under wind load. Typical fixation elements are rivets (when metal sections are used) and screws (on wooden frames). Special precautions are necessary during fixation of some panels in order to cope with movement caused by temperature or moisture variations met under various climatic conditions. This is particularly important for cementitious boards, which typically have around 3mm/m expansion when relative humidity (RH) changes from 0 to 100 %. Such panels may have dimension of approx 1300 x 3100mm with thicknesses varying from 4 to 18mm, and consequently the fixation devices are subjected to considerable shear forces. These panels are typically positioned and fixed by screws or rivets fastened through drill holes, precisely fitting the diameter of the screw or rivet shank, and not allowing any movement. A trick used by the men skilled in the art to allow dimensional changes of the panel without applying an excessive shear force to the rivet or screw shank is to drill holes having a diameter somewhat larger than the diameter of the shank.

However, this method is not suitable for coated panels. The coatings generally comprise one or more paint layers based on acrylic, polyurethane, epoxy, formaldehyde or other resins and combinations thereof. Such polymer coatings have a scratch resistance which is lower than metals, particularly metals used for making screws and rivets. The panels expand and shrink under cyclic heating and cooling and wetting and drying in normal weather conditions during their entire service life. Screw and rivet heads being tightly fixed to the panel surface scratch over the coatings, leading to their damage by abrasion, which is visible around the screw or rivet heads. These scratch marks do not only ruin the neat appearance of the panels but also damage the coated surface, thereby allowing water penetration which in turn gives rise to corrosion and frost damages.

### Description of prior art

There have been attempts to solve the abovementioned problem by reducing the pressure of the screw or rivet head on the coating, for example, by introducing a thin metal tube into the fixation hole, whose length slightly exceeds the thickness of the panel. This method has the disadvantage that additional measures are needed to avoid vibration noise, such as gluing ribbons of rubber foam onto the support elements. This represents an additional operation for the craftsman and increases the installation time and cost.

GB-2 202 024 describes a system for fixing a panel to a support which limits the penetration depth of the pin's shank into the support material. However, this system does not solve the problem of abrasion upon dimensional changes of the panel.

FR- 1 592 806 describes a fastening means comprising a corner iron and a series of superposed washers, but from an aesthetic point of view, this solution is not suitable for cladding panels.

NL - 1 001 623 discloses a panel fastening assembly comprising a washer whose inner side extends to form a cylindrical sheath, and which is inserted in the panel's fixation holes; the sheath has an outer diameter which matches substantially the diameter of the hole, and an inner diameter which is larger than the diameter of the non-threaded part of the screw's shank driven into it. However, this document does not address the problem of the washer becoming visible due to decentralization in the case of thermal or hydric movement of the panel, as the outer diameter of the washer equals the diameter of the screw head.

US4 985 979 describes a fastening system comprising a washer which is inserted in the panel's fixation holes and whose inner side extends to form a cylindrical sheath, while its inner diameter substantially equals the diameter of the hole. However, the fastener such as a rivet or bolt tightly fitting into the washer's sheath, has a head whose diameter is smaller than the washer's outer diameter, and hence the washer remains visible.

Another way to overcome the problem of damaging the coating is to put a rubber, silicone or Teflon washer between the panel surface and the rivet or screw head. Such solutions are both unsightly and lack durability. In order to obtain the desired effect, it is necessary to use a washer at least 1,5mm thick, which makes it too eye-catching. Moreover, the thicker the washer, the more it is exposed to weather and UV radiation, which leads to degradation of its mechanical properties.

### Summary of the invention

An object of the invention is to provide a fixation device which allows planar movement of a panel fixed on a support without damaging the panel surface.

A further object of the invention is that this device should be as discreet as possible.

A further object of the invention is that this device should be weather-resistant.

The subject of the invention is a panel fastening assembly for fastening panels provided with through-holes to a support. This panel comprises an in-driving means extending along an axis and a washer. The in-driving means comprises a head placed towards a proximal side of the axis, and a shank whose length is longer than the thickness of the panel; the washer is inserted between the in-driving means and the panel, and has an inner diameter substantially equal to the diameter of the through-hole and an outer diameter which is smaller than the diameter of the in-driving means' head. The inner side of the washer extends to form a sheath having an outer diameter substantially equal to the diameter of the through-hole, an inner diameter which is larger than the shank's diameter and an axial length which is not longer than the thickness of the panel to be fixed. The diameter of the head of the in-driving means is at least equal to the sum of the outer diameter of the washer and of the difference between the outer radius of the shank and the inner radius of the sheath.

The in-driving means are preferably chosen amongst the group consisting of nails, screws, bolts, rivets.

The washer is preferably circular.

According to an advantageous embodiment, the surface of the washer in contact with the panel surface is flat.

According to a preferred embodiment the sheath has a substantially frusto-conical shape, the outer diameter of its distal end being slightly smaller than the diameter of the through-hole.

The head of the in-driving means is preferably circular.

According to a preferred embodiment, the washer is made of stainless steel, and so is, preferably, the in-driving means.

According to a preferred embodiment, the panel fastening assembly is suitable for fastening fiber reinforced cementitious panels and siding planks.

The panel is advantageously a coated panel.

The outer face of the head of the in-driving means is advantageously coloured. This makes the fixation means almost invisible if its colour is chosen so as to match the colours of the corresponding panel.

### Short description of the drawings

These and further features and advantages of the invention will be explained in greater detail by way of example, reference being made to the accompanying drawings wherein:
Fig.1 is a longitudinal cross-section of the fastening assembly of the invention;
Fig.2 is a section of a detail of another embodiment of the washer;

The figures are not drawn to scale. Generally, identical components are denoted by the same reference numerals in the figures.

### Detailed description of preferred embodiments

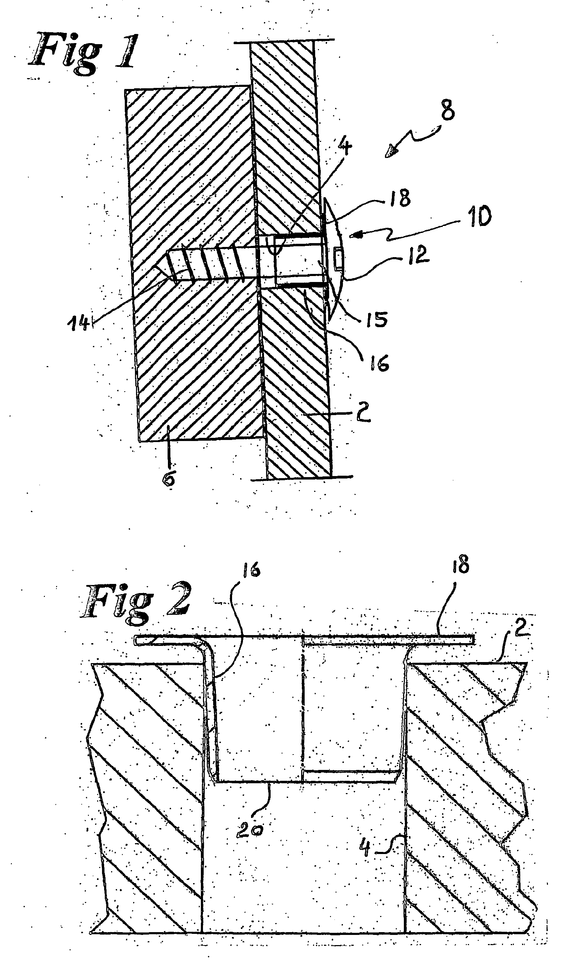

Fig. 1 represents a panel 2 provided with through-hole 4 fastened to a wooden support 6 by a panel fastening assembly 8 of the invention. The assembly 8 includes an in-driving means, in this case a screw 10, comprising a head 12 placed towards its proximal side, and a shank 14 whose length, comprising a non-threaded part 15 placed towards the head 12, exceeds the thickness of the panel 2, so that it can be anchored in the supporting frame 6 and strongly support the panel 2.

A cylindrical sheath 16 having an outer diameter substantially equal to the diameter of the through-hole 4 is placed in the through-hole before the in-driving means is inserted. This sheath 16 has an inner diameter which is larger than the shank diameter and an axial length which is not longer than the thickness of the panel 2.

Towards its proximal end, the sheath 16 opens out to form a washer 18 which is tightly clenched between the head 12 of the screw 10 and the panel 2. The washer 18 has here a circular form has an outer diameter which is smaller than the diameter of the screw head, so that it is normally hidden under this head. The washer can have another form than circular. In this case the term "outer diameter" of the washer 18 is to be understood here as its "larger dimension".

Though the washer may be very thin, it provides a distance between the head 12 and the panel surface. Accordingly, small relative movements will not leave marks on the surface of the panel.

Upon dimensional changes of the panel 2, the screw becomes decentralized, and hence the outer part of the washer might become visible. However, as the diameter of the head 12 of the screw 10 is such that it is at least equal to the sum of the outer diameter of the washer 18 and of the gap between the outer diameter of the shank 14 and the inner diameter of the sheath 16 (which represents the difference between the outer radius of the shank and the inner radius of the sheath), the washer is always hidden beneath the head 12.

It is obvious that while the embodiment shown in Fig. 1 uses a screw, other in-driving means than a screw can be used, according to the nature of the supporting frame. In the case of metal supporting frames, rivets or bolts can be successfully used.

Fig. 2 displays another embodiment of the sheath-washer assembly: the sheath 16 has here, instead of a cylindrical shape (as shown in Fig.1), a substantially frusto-conical shape, the outer diameter of its distal end 20 being slightly smaller than the inner diameter of the washer. As a consequence, the sheath-washer assembly can be force-fitted in the through-hole, which simplifies the fixation process.

The wall thickness of the sheath 16 is preferably as thin as possible in order to allow a maximum movement of the panel 2 around the screw. Such a minimal thickness is normally obtained by using metal sheaths, but other materials, like synthetic materials, are also possible. Advantageously, the sheath-washer assembly 16, 18 is made of stainless steel. It can be e.g. stamped from a sheet of metal.

Preferably, the hardness of the material of the sheath and washer is equal to or lower than the hardness of the in-driving means material. Upon movement of the panel 2 due to thermal or hydric shrinkage or dilatation, friction is absorbed at the upper surface of the washer 18, which is in contact with the inferior surface of the in-driving means head 12; consequently, the panel surface is not damaged by abrasion.

An additional advantage of the fixation assembly according to the present invention is that it reduces the damages on the panel surface in case the in-driving means 10 would not be inserted initially at an angle of 90° with respect to the panel surface. Also, in the latter case, the sheath serves as a guide to correct the initial insertion angle to an angle of 90° with respect to the panel surface. This can be particularly advantageous for the fixation of sidings usually overlapping each other.

The fixation assembly according to the present invention is particularly suitable for the fixation of finished panels, which are often used for interior and exterior wall cladding or sidings. The front surface of such finished panels comprises one or more coating layers, which have a decorative and/or technical function (e.g. protection against water penetration, anti-graffitti, and so on).

From an aesthetic point of view, the fixation assemblies are preferably as unobtrusive as possible. Therefore, the heads 12 are preferably coloured during the manufacturing process (e.g. by the use of a coating) to obtain a colour close to the colour of the panel 2 to be fastened.

The fixation assembly according to the present invention is especially designed for the fixation of fiber reinforced cementitious panels 2, more particularly coated fiber reinforced cementitious panels. The manufacture of fiber reinforced cementitious panels is well described in e.g. US2005/0072056 A1, WO2007/128679 A1 and EP0015538 A1.

### Example 1

The fixation assembly 8 according to the invention has been tested using stainless steel screws (head diameter = 15mm, shank diameter = 5,5mm and shank length = 35mm) applied on samples of 10x10 cm of Pictura Pro® (coated fiber reinforced cementitious boards) having a thickness of 8mm and provided with through-holes having a diameter of 7mm and one-piece assemblies of stainless steel sheaths 16 (0,3mm thickness; inner upper diameter of 6,4mm and inner lower diameter of 6mm; 5,4mm length) and flat washer 18 (outer diameter of 11,7mm). Three test samples were immersed in a water bath at 80°C during one hour and the remaining three test samples were stored in a ventilated oven at 80°C during one hour. The test samples were afterwards visually inspected; no surface damage or peeled off coating around the screw heads were observed.

### Comparative Example 2

Example 1 has been repeated with plain screws without using the fixation assemblies 8 according to the present invention. Severe surface and coating damage around the screw heads were noticed.

It will be appreciated by persons skilled in the art that the present invention is not limited to what has been particularly shown and described hereinabove. The invention resides in each and every novel characteristic feature and each and every combination of characteristic features according to the claims.

Reference numerals in the claims do not limit their protective scope. Use of the verb "to comprise" and its conjugations does not exclude the presence of elements other than those stated. Use of the article "a" or "an" preceding an element does not exclude the presence of a plurality of such elements.

The present invention has been described in terms of specific embodiments, which are illustrative of the invention and not to be construed as limiting.

## Claims

1. Panel fastening assembly (8) for fastening panels (2) provided with through-holes (4) to a support (6), and comprising an in-driving means extending along an axis and a washer, wherein :
- the in-driving means (10) comprises a head (12) placed towards a proximal side of the axis, and a shank (14) whose length is longer than the thickness of the panel (2);
- the washer (18) is inserted between the in-driving means (10) and the panel (2), and has an inner diameter substantially equal to the diameter of the through-hole (4) and an outer diameter which is smaller than the diameter of the in-driving means head (12);
- the inner side of the washer (18) extends to form a sheath (16) having an outer diameter substantially equal to the diameter of the through-hole (4), an inner diameter which is larger than the shank's (14) diameter and an axial length which is not longer than the thickness of the panel (2) to be fixed,
and **characterized in that**
- the diameter of the head (12) of the in-driving means (10) is at least equal to the sum of the outer diameter of the washer (18) and of the difference between the outer radius of the shank (14) and the inner radius of the sheath(16).

2. Panel fastening assembly (8) according to claim 1 **characterized in that** the in-driving means (10) is chosen amongst the group consisting of nails, screws, bolts, rivets.

3. Panel fastening assembly (8) according to any one of the preceding claims **characterized in that** the washer (18) is circular.

4. Panel fastening assembly according to any one of the preceding claims **characterized in that** the surface of the washer (18) in contact with the panel surface is flat.

5. Panel fastening assembly according to any one of the preceding claims **characterized in that** the sheath (16) has a substantially frusto-conical shape, the outer diameter of its distal end (20)being slightly smaller than the diameter of the through-hole (4).

6. Panel fastening assembly (8) according to any one of the preceding claims **characterized in that** the head (12) of the in-driving means (10) is circular.

7. Panel fastening assembly (8) according to any one of the preceding claims **characterized in that** the washer (18) is made of stainless steel.

8. Panel fastening assembly (8) according to any one of the preceding claims **characterized in that** the in-driving means (10) is made of stainless steel.

9. Panel fastening assembly (8) according to any one of the preceding claims **characterized in that** it is suitable for fastening fiber reinforced cementitious panels.

10. Panel fastening assembly (8) according to any one of the preceding claims **characterized in that** it is suitable for fastening a coated panel.

11. Panel fastening assembly (8) according to any one of the preceding claims **characterized in that** the outer face of the head (12) of the in-driving means (10) is coloured.

## Patentansprüche

1. Anordnung (8) zum Befestigen von mit Durchgangslöchern (4) versehenen Paneelen (2) an einer Unterlage (6) und umfassend ein Eintreibmittel, das sich an einer Achse entlang erstreckt, und eine Unterlegscheibe, wobei:
- das Eintreibmittel (10) einen Kopf (12), der in Richtung auf eine proximale Seite der Achse angeordnet ist, und einen Schaft (14), dessen Länge nicht größer als die Dicke des Paneels (2) ist, umfasst;
- die Unterlegscheibe (18) zwischen dem Eintreibmittel (10) und dem Paneel (2) eingefügt wird und einen Innendurchmesser aufweist, der im Wesentlichen gleich dem Durchmesser des Durchgangslochs (4) ist, und einen Außendurchmesser aufweist, der kleiner als der Durchmesser des Eintreibmittelkopfes (12) ist;
- die Innenseite der Unterlegscheibe (18) sich erstreckt, um eine Hülse (16) zu bilden, die einen Außendurchmesser aufweist, der im Wesentlichen gleich dem Durchmesser des Durchgangslochs (4) ist, einen Innendurchmesser, der größer ist als der Durchmesser des Schafts (14) und eine Axiallänge, die nicht länger als die Dicke des zu befestigenden Paneels (2) ist,
und **dadurch gekennzeichnet, dass**
- der Durchmesser des Kopfes (12) des Eintreibmittels (10) mindestens gleich der Summe des Außendurchmessers der Unterlegscheibe (18) und des Unterschieds zwischen dem Außenradius des Schafts (14) und des Innenradius der Hülse (16) ist.

2. Paneelbefestigungsanordnung (8 ) nach Anspruch 1, **dadurch gekennzeichnet, dass** das Eintreibmittel (10) aus der Gruppe ausgewählt wird, die aus Nägeln, Schrauben, Bolzen und Nieten besteht.

3. Paneelbefestigungsanordnung (8) nach einem der vorhergehenden Ansprüche, **dadurch gekennzeichnet, dass** die Unterlegscheibe (18) kreisförmig ist.

4. Paneelbefestigungsanordnung nach einem der vorhergehenden Ansprüche, **dadurch gekennzeichnet, dass** die Oberfläche der Unterlegscheibe (18) in Kontakt mit der Paneeloberfläche flach ist.

5. Paneelbefestigungsanordnung nach einem der vorhergehenden Ansprüche, **dadurch gekennzeichnet, dass** die Hülse (16) eine im Wesentlichen kegelstumpfförmige Gestalt aufweist, wobei der Außendurchmesser ihres Distalendes (20) etwas kleiner als der Durchmesser des Durchgangslochs (4) ist.

6. Paneelbefestigungsanordnung (8) nach einem der vorhergehenden Ansprüche, **dadurch gekennzeichnet, dass** der Kopf (12) des Eintreibmittels (10) kreisförmig ist.

7. Paneelbefestigungsanordnung (8) nach einem der vorhergehenden Ansprüche, **dadurch gekennzeichnet, dass** die Unterlegscheibe (18) aus rostfreiem Stahl hergestellt ist.

8. Paneelbefestigungsanordnung (8) nach einem der vorhergehenden Ansprüche, **dadurch gekennzeichnet, dass** das Eintreibmittel (10) aus rostfreiem Stahl hergestellt ist.

9. Paneelbefestigungsanordnung (8) nach einem der vorhergehenden Ansprüche, **dadurch gekennzeichnet, dass** sie zum Befestigen von faserverstärkten zementgebundenen Paneelen geeignet ist.

10. Paneelbefestigungsanordnung (8) nach einem der vorhergehenden Ansprüche, **dadurch gekennzeichnet, dass** sie zum Befestigen eines beschichteten Paneels geeignet ist.

11. Paneelbefestigungsanordnung (8) nach einem der vorhergehenden Ansprüche, **dadurch gekennzeichnet, dass** die Außenseite des Kopfes (12) des Eintreibmittels (10) farbig ist.

## Revendications

1. Ensemble de fixation de panneau (8) destiné à fixer des panneaux (2), pourvus d'orifices débouchants (4), à un support (6), et comprenant un moyen d'enfoncement s'étendant le long d'un axe et une rondelle, dans lequel:
- le moyen d'enfoncement (10) comprend une tête (12) placée vers un côté proximal de l'axe, et une tige (14) dont la longueur est plus importante que l'épaisseur du panneau (2) ;
- la rondelle (18) est insérée entre le moyen d'enfoncement (10) et le panneau (2) et comporte un diamètre intérieur sensiblement égal au diamètre de l'orifice débouchant (4) et un diamètre extérieur qui est inférieur au diamètre de la tête de moyen d'enfoncement (12) ;
- le côté intérieur de la rondelle (18) s'étend pour former une gaine (16) possédant un diamètre extérieur sensiblement égal au diamètre de l'orifice débouchant (4), un diamètre intérieur qui est supérieur au diamètre de la tige (14) et une longueur axiale qui n'est pas plus importante que l'épaisseur du panneau (2) destiné à être fixé,
et **caractérisé en ce que**
- le diamètre de la tête (12) du moyen d'enfoncement (10) est au moins égal à la somme du diamètre extérieur de la rondelle (18) et de la différence entre le rayon extérieur de la tige (14) et le rayon intérieur de la gaine (16).

2. Ensemble de fixation de panneau (8) selon la revendication 1, **caractérisé en ce que** le moyen d'enfoncement (10) est choisi parmi le groupe constitué de clous, de vis, de boulons, de rivets.

3. Ensemble de fixation de panneau (8) selon une quelconque des revendications précédentes, **caractérisé en ce que** la rondelle (18) est circulaire.

4. Ensemble de fixation de panneau selon une quelconque des revendications précédentes, **caractérisé en ce que** la surface de la rondelle (18) en contact avec le panneau surface est plate.

5. Ensemble de fixation de panneau selon une quelconque des revendications précédentes, **caractérisé en ce que** la gaine (16) possède une forme sensiblement tronconique, le diamètre extérieur de son extrémité distale (20) étant légèrement inférieur au diamètre de l'orifice débouchant (4).

6. Ensemble de fixation de panneau (8) selon une quelconque des revendications précédentes, **caractérisé en ce que** la tête (12) du moyen d'enfoncement (10) est circulaire.

7. Ensemble de fixation de panneau (8) selon une quelconque des revendications précédentes, **caractérisé en ce que** la rondelle (18) est faite d'acier inoxydable.

8. Ensemble de fixation de panneau (8) selon une quelconque des revendications précédentes, **caractérisé en ce que** le moyen d'enfoncement (10) est fait d'acier inoxydable.

9. Ensemble de fixation de panneau (8) selon une quelconque des revendications précédentes, **caractérisé en ce qu'**il est approprié pour fixer des panneaux cimentaires renforcées avec des fibres.

10. Ensemble de fixation de panneau (8) selon une quelconque des revendications précédentes **caractérisé en ce qu'**il est approprié pour fixer un panneau enduit.

11. Ensemble de fixation de panneau (8) selon une quelconque des revendications précédentes, **caractérisé en ce que** la face extérieure de la tête (12) du moyen d'enfoncement (10) est colorée.
